# FASCICULE DE BREVET EUROPEEN

(11) **EP 3 552 969 B1**
(45) Date de publication et mention de la délivrance du brevet: **24.06.2020**
(21) Numéro de dépôt: 19167547.9
(22) Date de dépôt: 05.04.2019
(51) Int. Cl.: B64D 15/12, F02C 7/047, B64D 15/20, B64D 33/02

(54) **NACELLE DE MOTEUR D'AERONEF MUNIE D'UN SYSTEME DE PROTECTION CONTRE LE GIVRE ET PROCEDE DE PROTECTION ASSOCIE**
TRIEBWERKSGONDEL EINES LUFTFAHRZEUGS, DIE MIT EINEM VEREISUNGS-SCHUTZSYSTEM AUSGESTATTET IST, UND ENTSPRECHENDES SCHUTZVERFAHREN
AIRCRAFT ENGINE NACELLE EQUIPPED WITH AN ICE PROTECTION SYSTEM AND ASSOCIATED PROTECTION METHOD

(30) Priorité: 10.04.2018 FR 1853110
(43) Date de publication de la demande: 16.10.2019
(73) Titulaire: Airbus Operations S.A.S., 31060 Toulouse (FR)
(72) Inventeur: CARCONE, Jonathan, 31300 TOULOUSE (FR); PORTE, Alain, 31700 COLOMIERS (FR); PONS, François, 31700 DAUX (FR)
(74) Mandataire: Gicquel, Olivier Yves Gérard

(56) Documents cités:
- EP-A2- 1 893 484
- EP-A2- 2 317 293
- WO-A1-2010/055215

## Description

### Domaine technique

L'invention concerne une nacelle de moteur d'aéronef comportant un système de protection contre le givre et un procédé de protection contre le givre d'une telle nacelle de moteur d'aéronef.

### Etat de la technique antérieure

Un ensemble propulsif d'aéronef comporte un moteur encerclé par une nacelle et qui présente à l'avant une entrée d'air qui canalise l'air pour le diriger vers le moteur. L'entrée d'air comporte une lèvre et une partie tubulaire qui sont exposés à l'air froid et sur lesquelles du givre est susceptible de se former à partir de l'eau présente dans l'atmosphère. La quantité de givre qui se dépose sur la paroi de la lèvre de l'aéronef est variable et dépend des conditions climatiques dans lesquelles vole l'aéronef.

Pour limiter et/ou éliminer cette formation de givre, il est connu par exemple du document EP 1 893 484 des nacelles de moteurs d'aéronefs, dont l'entrée d'air est en tout ou partie recouverte d'un système de dégivrage segmenté en plusieurs secteurs de dégivrage. Un premier secteur de dégivrage, situé dans la partie tubulaire de l'entrée d'air, est alimenté en continu pour empêcher la formation de givre et un deuxième secteur de dégivrage, situé dans la lèvre de l'entrée d'air, est alimenté selon un cycle de chauffe périodique, permettant dans un premier temps la formation de givre, puis dans un second temps son décollement. Le givre ainsi décollé est aspiré par l'entrée d'air vers le moteur. Le dégivrage de la partie tubulaire n'est pas optimisé, car il est mis en œuvre indépendamment de la quantité de givre présente. Ainsi, il se peut que la quantité de givre présente soit négligeable ou au contraire que la quantité de givre soit trop importante. Dans le premier cas, il y a une utilisation non optimisée des ressources électriques de l'aéronef. Dans le deuxième cas, il est souhaitable d'améliorer les performances du dégivrage de la nacelle.

Le document WO 2010/055215 décrit un procédé de dégivrage électrique d'un ensemble d'entrée d'air d'une nacelle de turboréacteur prenant en compte la température extérieure dans un modèle thermique pour déterminer une puissance de dégivrage. Dans ce document le givre se forme sur toute l'entrée d'air.

### Exposé de l'invention

La présente invention a notamment pour but d'apporter une solution à ces problèmes. Elle concerne une nacelle de moteur d'aéronef comportant une entrée d'air comprenant une lèvre, une pièce tubulaire d'entrée d'air et un système de protection contre le givre, ledit système de protection contre le givre comportant un moyen d'antigivrage alimenté en continu par une première source d'énergie électrique et recouvrant en tout ou partie la lèvre et un moyen de dégivrage alimenté par une deuxième source d'énergie électrique recouvrant la pièce tubulaire d'entrée d'air.

La nacelle est remarquable en ce que le moyen de dégivrage comprend en outre un contrôleur configuré pour :
- acquérir une valeur courante de température totale de l'air, et
- commander la deuxième source d'énergie électrique en fonction de la valeur courante de température totale de l'air,
- pour commander l'activation la première source d'énergie électrique, préalablement à l'activation de la deuxième source d'énergie électrique en fonction de la valeur courante de température totale de l'air.

Ainsi, le givre se forme préférentiellement dans la pièce tubulaire d'entrée d'air, laquelle est dégivrée grâce au moyen de dégivrage qui est alimenté en fonction de la température totale de l'air. Cela permet d'optimiser les ressources électriques de l'aéronef et de contrôler la quantité de givre présente sur la paroi de la pièce tubulaire d'entrée d'air.

De façon avantageuse, le contrôleur est configuré pour commander de façon itérative la deuxième source d'énergie électrique selon un temps de pause pendant lequel le moyen de dégivrage n'est pas alimenté en énergie électrique et un temps d'activation pendant lequel le moyen de dégivrage est alimenté en énergie électrique. Le contrôleur comprend une unité de traitement et une mémoire de données dans laquelle est enregistrée une table de référence comportant un ou plusieurs enregistrements agencés pour mémoriser chacun une température totale de l'air, un temps d'activation et un temps de pause de la deuxième source d'énergie électrique, et est configuré pour :
- rechercher un enregistrement de la table de référence dont la valeur de la température totale de l'air correspond à la valeur courante de température totale de l'air ;
- lire dans l'enregistrement de la table de référence associé à la valeur courante de température totale de l'air, les valeurs respectives du temps de pause et du temps d'activation ;
- commander la deuxième source d'énergie électrique avec :
   ∘ un temps de pause d'une durée égale à la valeur du temps de pause lue, puis
   ∘ un temps d'activation d'une durée égale à la valeur du temps d'activation lue.

Dans un mode de réalisation, la table de référence comporte une puissance de dégivrage, et le contrôleur est configuré pour lire dans l'enregistrement de la table de référence associé à la valeur courante de température totale de l'air, la valeur de la puissance de dégivrage, et pour commander la deuxième source d'énergie électrique pour alimenter le moyen de dégivrage en fonction de la valeur de la puissance de dégivrage lue.

De manière avantageuse, le moyen d'antigivrage et le moyen de dégivrage comprennent des réseaux d'éléments résistifs chauffants alimentés respectivement par la première et deuxième source d'énergie électrique.

L'invention est également relative à un procédé de protection contre le givre d'une nacelle de moteur d'aéronef comportant une entrée d'air comprenant une lèvre, une pièce tubulaire d'entrée d'air et un système de protection contre le givre, ledit système de protection contre le givre comportant un moyen d'antigivrage alimenté en continu par une première source d'énergie électrique et recouvrant en tout ou partie la lèvre et un moyen de dégivrage alimenté par une deuxième source d'énergie électrique recouvrant la pièce tubulaire d'entrée d'air. Le procédé est remarquable en ce qu'il comporte les étapes suivantes mises en œuvre par un contrôleur du système de protection contre le givre :
- acquisition d'une valeur courante de température totale de l'air ;
- commande de la deuxième source d'énergie électrique en fonction de la valeur courante de température totale de l'air,
- une étape d'activation de la première source d'énergie électrique, préalable à l'étape d'activation de la deuxième source d'énergie électrique, en fonction de la valeur courante de température totale de l'air.

De manière avantageuse, le contrôleur étant configuré pour commander de façon itérative la deuxième source d'énergie électrique selon un temps de pause pendant lequel le moyen de dégivrage n'est pas alimenté en énergie électrique et un temps d'activation pendant lequel le moyen de dégivrage est alimenté en énergie électrique, le contrôleur comportant une unité de traitement et une mémoire de données dans laquelle est enregistrée une table de référence comportant un ou plusieurs enregistrements agencés pour mémoriser chacun une température totale de l'air, un temps d'activation et un temps de pause de la deuxième source d'énergie électrique, l'étape de commande de la deuxième source d'énergie électrique en fonction de la valeur courante de température totale de l'air comprend les sous-étapes suivantes :
- recherche d'un enregistrement de la table de référence dont la valeur de la température totale de l'air correspond à la valeur courante de température totale de l'air ;
- lecture dans l'enregistrement de la table de référence associé à la valeur courante de température totale de l'air, des valeurs respectives du temps de pause et du temps d'activation ;
- commande de la deuxième source d'énergie électrique avec :
   ∘ un temps de pause d'une durée égale à la valeur du temps de pause lue, puis
   ∘ un temps d'activation d'une durée égale à la valeur du temps d'activation lue.

Dans un mode de réalisation, chaque enregistrement de la table de référence comportant la valeur d'une puissance de dégivrage, l'étape de commande de la deuxième source d'énergie électrique en fonction de la valeur courante de température totale de l'air comprend en outre les sous-étapes suivantes :
- lecture dans l'enregistrement de la table de référence associé à la valeur courante de température totale de l'air, la valeur de la puissance de dégivrage, et
- commande de la deuxième source d'énergie électrique pour alimenter le moyen de dégivrage en fonction de la valeur de la puissance de dégivrage lue.

### Brève description des dessins

D'autres caractéristiques, détails et avantages de l'invention ressortiront plus clairement de la description détaillée donnée ci-après à titre indicatif en relation avec des dessins parmi lesquels :
- la figure 1 est une vue partielle de côté et en coupe d'une nacelle de moteur comportant un système de protection contre le givre selon un mode de réalisation de l'invention ; et
- la figure 2 est une vue en coupe d'un matelas thermique.

### Exposé détaillé

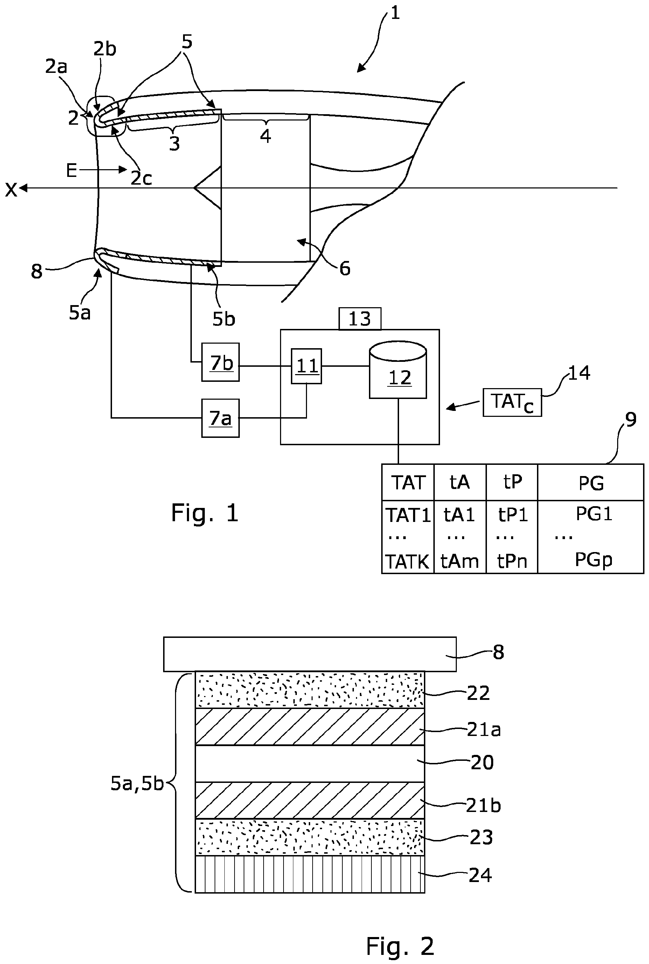

Une vue partielle de côté et en coupe d'une nacelle 1 de moteur d'aéronef est représentée schématiquement en figure 1. Dans la description qui suit, et par convention, on appelle X l'axe longitudinal d'un moteur de l'aéronef orienté positivement dans le sens d'avancement de l'aéronef.

Une nacelle 1 de moteur d'aéronef prend une forme annulaire autour de l'axe longitudinal X. Une telle nacelle 1 encercle une entrée d'air E suivie le long de l'axe longitudinal X d'un moteur 6, tel qu'un turboréacteur. La nacelle 1 comporte une lèvre 2, suivie le long de l'axe longitudinal X d'une pièce tubulaire 3 d'entrée d'air et d'une pièce tubulaire moteur 4.

La lèvre 2 comprend une paroi en U dont l'ouverture est orientée vers l'arrière de l'aéronef et dont le fond forme un bord d'attaque 2a de la lèvre 2. La lèvre 2 s'étend de part et d'autre du bord d'attaque 2a, le long d'une face extérieure 2b orientée vers l'extérieur et en contact avec l'air extérieur et d'une face intérieure 2c orientée vers l'entrée d'air E.

La pièce tubulaire moteur 4 comporte une paroi qui encercle le moteur 6 de l'aéronef.

La pièce tubulaire 3 d'entrée d'air comporte une paroi qui s'étend entre la lèvre 2 et la pièce tubulaire moteur 4, dans le prolongement de la face intérieure 2c de la lèvre 2.

La nacelle 1 d'aéronef comporte en outre un système de protection contre le givre 5 comportant un moyen d'antigivrage par ruissellement 5a, appelé moyen d'antigivrage 5a, et un moyen de dégivrage 5b. Le moyen de d'antigivrage et le moyen de dégivrage présentent une forme annulaire. Le moyen d'antigivrage 5a recouvre tout ou partie de la paroi de la lèvre 2, c'est-à-dire qu'il s'étend le long de la face intérieure 2c jusqu'au bord d'attaque 2a ou le long de la face intérieure 2c et de la face extérieure 2b. Le moyen de dégivrage 5b recouvre tout ou partie de la paroi de la pièce tubulaire 3 d'entrée d'air.

Le moyen d'antigivrage 5a et le moyen de dégivrage 5b comprennent des réseaux d'éléments résistifs chauffants, couramment appelés matelas thermiques, et alimentés respectivement par une première source d'énergie électrique 7a et une deuxième source d'énergie électrique 7b.

Le système de protection contre le givre 5 comporte en outre un contrôleur 13 comprenant une unité de traitement 11 et une mémoire de données 12. Cette dernière est configurée pour enregistrer une table de référence 9 comportant un ou plusieurs enregistrements agencés pour mémoriser chacun une température totale de l'air TAT1,...,TATk (« Total Air Température » en langue anglaise), un temps d'activation tA1, ... tAm de la deuxième source d'énergie électrique 7b et un temps de pause tP1, ..., tPn de la deuxième source d'énergie électrique.

Les valeurs des temps d'activation tA1,...,tAm et des temps de pause tP1,...,tPn de chaque enregistrement sont prédéfinies en fonction de la température totale de l'air TAT1,...,TATk associée. Par exemple pour une température totale de l'air TAT1 égale à -18°C, traduisant une quantité d'eau élevée dans l'atmosphère, le temps d'activation tA1 peut être égal à 4 secondes et le temps de pause tP1 peut être égal à 20 secondes. Pendant le temps de pause tP1 il est estimé qu'une épaisseur de givre de 0.6mm se créée sur la pièce tubulaire 3 d'entrée d'air. Pour une température totale de l'air TAT2 égale à 0°C, traduisant une quantité d'eau faible dans l'atmosphère, le temps d'activation tA2 peut être égal à 1 seconde et le temps de pause tP2 peut être égal à 80 secondes. Pendant le temps de pause tP2 il est estimé qu'une épaisseur de givre de 0.1mm se créée sur la pièce tubulaire 3 d'entrée d'air.

Selon une variante, chaque enregistrement de la table de référence 9 comprend la valeur d'une puissance de dégivrage PG1,...,PGp.

A titre d'exemple, pour une température totale de l'air TAT1 égale à -18°C, la puissance de dégivrage peut être égale à 15 kW/m2, et pour une température totale de l'air TAT2 égale à 0°C la puissance de dégivrage peut être égale à 3 kW/m2. Cette caractéristique permet d'optimiser davantage les ressources en énergie de l'aéronef.

Le système de protection contre le givre 5 est relié en entrée à une source d'informations 14 apte à fournir la valeur courante de la température totale de l'air TATc. La valeur de la température totale de l'air courante TATc est mesurée par des sondes présentes sur le fuselage de l'aéronef ou est estimée à partir d'un ensemble de données de vols, selon des méthodes bien connues de l'homme du métier.

La figure 2 présente une vue en coupe d'un matelas thermique 5a, 5b. Un tel matelas thermique 5a, 5b comporte un noyau 20 comportant les éléments résistifs chauffants alimentés par la première ou la deuxième source d'énergie électrique 7a, 7b. De tels éléments résistifs peuvent être par exemple des nanotubes de carbone ou un alliage d'aluminium noyés dans une résine thermoplastique ou une résine thermodurcissable. De part et d'autre du noyau 20 sont apposés une première et une deuxième couches de fibre de verre 21a et 21b. Pour limiter les pertes thermiques, le matelas thermique 5a, 5b est recouvert d'un isolant thermique 24 solidarisé à la fibre de verre 21b par un premier adhésif 23. Le matelas thermique 5a, 5b est solidarisé à la partie à réchauffer, ici tout ou partie de la paroi 8 de l'entrée d'air E de la nacelle 1, par un deuxième adhésif 22. Le matelas thermique 5a, 5b n'est pas limité à cette configuration. En effet, les adhésifs 22, 23 peuvent être remplacés par des organes d'ancrage connus de l'homme du métier.

Selon une variante non représentée sur les figures, tout ou partie du système de protection contre le givre 5 peut être solidaire d'un panneau acoustique apposé sur tout ou partie de l'entrée d'air de la nacelle 1 et configuré pour atténuer les bruits du moteur 6. Le système de protection contre le givre 5 comporte dès lors des orifices traversants pour permettre le fonctionnement du panneau acoustique.

En fonctionnement, le moyen d'antigivrage 5a est alimenté en continu par la première source d'énergie électrique 7a, de manière à maintenir la température de la lèvre 2 à une température supérieure ou égale à 0°C. Cette caractéristique empêche l'accrétion de givre sur la lèvre 2 et permet de guider et/ou faire ruisseler l'eau déposée vers la pièce tubulaire 3 d'entrée d'air où elle se solidifie en formant du givre. Pour cela, le contrôleur 13 est configuré pour commander une étape d'activation de la première source d'énergie électrique 7a pour la mise en œuvre du moyen d'antigivrage 5a.

De façon avantageuse, le contrôleur 13 commande la puissance d'alimentation du moyen d'antigivrage 5a en fonction des conditions météorologiques dans lesquelles vole l'avion, afin de garantir une température supérieure ou égale à 0°C de la lèvre.

Le contrôleur 13 est configuré pour activer la deuxième source d'énergie électrique 7b en fonction de la valeur courante de température totale de l'air courante TATc, de façon à limiter l'épaisseur de givre présente sur la paroi de la pièce tubulaire d'entrée d'air à trois millimètres,

Pour cela, le contrôleur 13 est configuré pour :
- acquérir une valeur courante de température totale de l'air TATc, auprès de la source d'information 14, et
- commander la deuxième source d'énergie électrique 7b en fonction de la valeur courante de température totale de l'air TATc.

Le contrôleur 13 est configuré pour mettre en œuvre les sous-étapes suivantes :
- rechercher un enregistrement de la table de référence 9 dont la valeur de la température totale de l'air TAT correspond à la valeur courante de température totale de l'air TATc ;
- lire dans l'enregistrement de la table de référence 9 associé à la valeur courante de température totale de l'air TATc, les valeurs respectives du temps de pause tP et du temps d'activation tA ;
- commander la deuxième source d'énergie électrique 7b avec :
   ∘ un temps de pause d'une durée égale à la valeur du temps de pause tP lue, puis
   ∘ un temps d'activation d'une durée égale à la valeur du temps d'activation tA lue.

Dans un exemple particulier de réalisation de l'invention, une valeur de température totale de l'air TAT lue dans la table de référence 9 est considérée correspondre à la valeur courante de température totale de l'air TATc lorsque la différence entre d'une part cette valeur de température totale de l'air TAT lue dans la table de référence et d'autre part la valeur courante de température totale de l'air TATc, est inférieure à un seuil prédéterminé de température. Ce seuil prédéterminé de température est par exemple choisi égal à 0,5 degré lorsque les valeurs consécutives de température totale de l'air enregistrées dans la table de référence 9 sont espacées de 1 degré.

Selon un mode de réalisation de l'invention, le contrôleur 13 est configuré pour lire dans l'enregistrement de la table de référence 9 associé à la valeur courante de température totale de l'air TATc, la valeur de la puissance de dégivrage PG1,...PGp, et commander la deuxième source d'énergie électrique 7b pour alimenter le moyen de dégivrage 5b en fonction de la valeur de la puissance de dégivrage PG1,...PGp lue.

## Revendications

1. Nacelle (1) de moteur d'aéronef comportant une entrée d'air (E) comprenant une lèvre (2), une pièce tubulaire (3) d'entrée d'air et un système de protection contre le givre (5), ledit système de protection contre le givre (5) comportant un moyen d'antigivrage (5a) recouvrant en tout ou partie la lèvre (2) et un moyen de dégivrage (5b) recouvrant la pièce tubulaire (3) d'entrée d'air et comportant un contrôleur (13) configuré pour acquérir une valeur courante de température, **caractérisé en ce que** :
- le moyen d'antigivrage (5a) est alimenté en continu par une première source d'énergie électrique (7a) et le moyen de dégivrage (5b) est alimenté par une deuxième source d'énergie électrique (7b),
- la valeur courante de température acquise par le contrôleur (13) est la valeur courante de la température totale de l'air (TATc), et
- le contrôleur (13) est configuré pour :
∘ commander la deuxième source d'énergie électrique (7b) en fonction de la valeur courante de température totale de l'air (TATc), et
∘ commander l'activation de la première source d'énergie électrique (7a), préalablement à l'activation de la deuxième source d'énergie électrique (7b) en fonction de la valeur courante de température totale de l'air (TATc).

2. Nacelle (1) selon la revendication précédente, **caractérisé en ce que** le contrôleur (13) est configuré pour commander de façon itérative la deuxième source d'énergie électrique (7b) selon un temps de pause (tP) pendant lequel le moyen de dégivrage (5b) n'est pas alimenté en énergie électrique et un temps d'activation (tA) pendant lequel le moyen de dégivrage (5b) est alimenté en énergie électrique, le contrôleur (13) comprenant une unité de traitement (11) et une mémoire de données (12) dans laquelle est enregistrée une table de référence (9) comportant un ou plusieurs enregistrements agencés pour mémoriser chacun une température totale de l'air (TAT1,...,TATk), un temps d'activation (tA1,...,tAm) et un temps de pause (tP1,...,tPn) de la deuxième source d'énergie électrique (7b), et **en ce que** le contrôleur (13) est configuré pour :
- rechercher un enregistrement de la table de référence (9) dont la valeur de la température totale de l'air (TAT) correspond à la valeur courante de température totale de l'air (TATc) ;
- lire dans l'enregistrement de la table de référence (9) associé à la valeur courante de température totale de l'air (TATc), les valeurs respectives du temps de pause (tP) et du temps d'activation (tA) ;
- commander la deuxième source d'énergie électrique (7b) avec :
∘ un temps de pause d'une durée égale à la valeur du temps de pause (tP) lue, puis
∘ un temps d'activation d'une durée égale à la valeur du temps d'activation (tA) lue.

3. Nacelle (1) selon la revendication précédente, **caractérisé en ce que** chaque enregistrement de la table de référence (9) comporte une puissance de dégivrage (PG1,..., PGp), et **en ce que** le contrôleur (13) est configuré pour lire dans l'enregistrement de la table de référence (9) associé à la valeur courante de température totale de l'air (TATc), la valeur de la puissance de dégivrage (PG1,...PGp), et pour commander la deuxième source d'énergie électrique (7b) pour alimenter le moyen de dégivrage 5b en fonction de la valeur de la puissance de dégivrage (PG1,...PGp) lue .

4. Nacelle (1) selon l'une quelconque des revendications précédentes, **caractérisé en ce que** le moyen d'antigivrage (5a) et le moyen de dégivrage (5b) comprennent des réseaux d'éléments résistifs chauffants alimentés respectivement par la première et deuxième source d'énergie électrique (7a, 7b).

5. Procédé de protection contre le givre d'une nacelle de moteur d'aéronef comportant une entrée d'air (E) comprenant une lèvre (2), une pièce tubulaire (3) d'entrée d'air et un système de protection contre le givre (5), ledit système de protection contre le givre (5) comportant un moyen d'antigivrage (5a) alimenté en continu par une première source d'énergie électrique (7a) et recouvrant en tout ou partie la lèvre (2) et un moyen de dégivrage (5b), alimenté par une deuxième source d'énergie électrique (7b), recouvrant la pièce tubulaire (3) d'entrée d'air, ledit procédé comportant les étapes suivantes mises en œuvre par un contrôleur (13) du système de protection contre le givre (5) :
- acquisition d'une valeur courante de température totale de l'air (TATc) ;
- commande de la deuxième source d'énergie électrique (7b) en fonction de la valeur courante de température totale de l'air (TATc),
- activation de la première source d'énergie électrique (7a), préalable à l'étape d'activation de la deuxième source d'énergie électrique (7b), en fonction de la valeur courante de température totale de l'air (TATc)..

6. Procédé de protection contre le givre d'une nacelle de moteur d'aéronef selon la revendication précédente, **caractérisé en ce que**, le contrôleur (13) étant configuré pour commander de façon itérative la deuxième source d'énergie électrique (7b) selon un temps de pause (tP) pendant lequel le moyen de dégivrage (5b) n'est pas alimenté en énergie électrique et un temps d'activation (tA) pendant lequel le moyen de dégivrage (5b) est alimenté en énergie électrique, le contrôleur (13) comportant une unité de traitement (11) et une mémoire de données (12) dans laquelle est enregistrée une table de référence (9) comportant un ou plusieurs enregistrements agencés pour mémoriser chacun une température totale de l'air (TAT1,...,TATk), un temps d'activation (tA1,...,tAm) et un temps de pause (tP1,...,tPn) de la deuxième source d'énergie électrique (7b), l'étape de commande de la deuxième source d'énergie électrique (7b) en fonction de la valeur courante de température totale de l'air (TATc) comprend les sous-étapes suivantes :
- recherche d'un enregistrement de la table de référence (9) dont la valeur de la température totale de l'air (TAT) correspond à la valeur courante de température totale de l'air (TATc) ;
- lecture dans l'enregistrement de la table de référence (9) associé à la valeur courante de température totale de l'air (TATc), des valeurs respectives du temps de pause (tP) et du temps d'activation (tA) ;
- commande de la deuxième source d'énergie électrique (7b) avec :
∘ un temps de pause d'une durée égale à la valeur du temps de pause (tP) lue, puis
∘ un temps d'activation d'une durée égale à la valeur du temps d'activation (tA) lue.

7. Procédé de protection contre le givre d'une nacelle (1) de moteur d'aéronef selon la revendication précédente **caractérisé en ce que**, chaque enregistrement de la table de référence (9) comportant la valeur d'une puissance de dégivrage (PG1,...PGp), l'étape de commande de la deuxième source d'énergie électrique (7b) en fonction de la valeur courante de température totale de l'air (TATc) comprend en outre les sous-étapes suivantes :
- lecture dans l'enregistrement de la table de référence (9) associé à la valeur courante de température totale de l'air (TATc), de la valeur de la puissance de dégivrage (PG1,...PGp), et
- commande de la deuxième source d'énergie électrique (7b) pour alimenter le moyen de dégivrage (5b) en fonction de la valeur de la puissance de dégivrage (PG1,...PGp) lue

## Patentansprüche

1. Gondel (1) eines Luftfahrzeugtriebwerks, die einen Lufteinlass (E) umfasst, welcher eine Lippe (2), ein rohrförmiges Lufteinlassstück (3) und ein Vereisungsschutzsystem (5) beinhaltet, wobei das Vereisungsschutzsystem (5) ein Antivereisungsmittel (5a), das die Lippe (2) ganz oder teilweise abdeckt, und ein Enteisungsmittel (5b), das das rohrförmige Lufteinlassstück (3) abdeckt, umfasst und eine Steuerung (13) umfasst, die dazu konfiguriert ist, einen aktuellen Temperaturwert zu erfassen, **dadurch gekennzeichnet, dass**:
- das Antivereisungsmittel (5a) durch eine erste elektrische Energiequelle (7a) kontinuierlich versorgt wird und das Enteisungsmittel (5b) durch eine zweite elektrische Energiequelle (7b) versorgt wird,
- der aktuelle Temperaturwert, der durch die Steuerung (13) erfasst wird, der aktuelle Wert der Gesamtlufttemperatur (TATc) ist und
- die Steuerung (13) für Folgendes konfiguriert ist:
∘ Ansteuern der zweiten elektrischen Energiequelle (7b) in Abhängigkeit von dem aktuellen Wert der Gesamtlufttemperatur (TATc) und
∘ Ansteuern des Aktivierens der ersten elektrischen Energiequelle (7a) vor dem Aktivieren der zweiten elektrischen Energiequelle (7b) in Abhängigkeit von dem aktuellen Wert der Gesamtlufttemperatur (TATc).

2. Gondel (1) nach dem vorhergehenden Anspruch, **dadurch gekennzeichnet, dass** die Steuerung (13) dazu konfiguriert ist, die zweite elektrische Energiequelle (7b) gemäß einer Pausenzeit (tP), während der das Enteisungsmittel (5b) nicht mit elektrischer Energie versorgt wird, und einer Aktivierungszeit (tA), während der das Enteisungsmittel (5b) mit elektrischer Energie versorgt wird, iterativ anzusteuern, wobei die Steuerung (13) eine Verarbeitungseinheit (11) und einen Datenspeicher (12) beinhaltet, in welchem eine Referenztabelle (9) aufgezeichnet ist, die eine oder mehrere Aufzeichnungen umfasst, die angeordnet sind, um jeweils eine Gesamtlufttemperatur (TAT1,...,TATk), eine Aktivierungszeit (tA1,...,tAm) und eine Pausenzeit (tP1,...,tPn) der zweiten elektrischen Energiequelle (7b) zu speichern, und dass die Steuerung (13) für Folgendes konfiguriert ist:
- Suchen einer Aufzeichnung der Referenztabelle (9), deren Wert der Gesamtlufttemperatur (TAT) dem aktuellen Wert der Gesamtlufttemperatur (TATc) entspricht;
- Lesen, in der Aufzeichnung der Referenztabelle (9), die mit dem aktuellen Wert der Gesamtlufttemperatur (TATc) assoziiert ist, der jeweiligen Werte der Pausenzeit (tP) und der Aktivierungszeit (tA);
- Ansteuern der zweiten elektrischen Energiequelle (7b) mit:
∘ einer Pausenzeit mit einer Dauer, die gleich dem gelesenen Wert der Pausenzeit (tP) ist, dann
∘ einer Aktivierungszeit mit einer Dauer, die gleich dem gelesenen Wert der Aktivierungszeit (tA) ist.

3. Gondel (1) nach dem vorhergehenden Anspruch, **dadurch gekennzeichnet, dass** jede Aufzeichnung der Referenztabelle (9) eine Enteisungsleistung (PG1,...,PGp) umfasst und dass die Steuerung (13) dazu konfiguriert ist, in der Aufzeichnung der Referenztabelle (9), die mit dem aktuellen Wert der Gesamtlufttemperatur (TATc) assoziiert ist, den Wert der Enteisungsleistung (PG1,...PGp) zu lesen und die zweite elektrische Energiequelle (7b) anzusteuern, um das Enteisungsmittel 5b in Abhängigkeit von dem gelesenen Wert der Enteisungsleistung (PG1,...PGp) zu versorgen.

4. Gondel (1) nach einem der vorhergehenden Ansprüche, **dadurch gekennzeichnet, dass** das Antivereisungsmittel (5a) und das Enteisungsmittel (5b) Netzwerke aus Heizwiderstandselementen beinhalten, die jeweils durch die erste und zweite elektrische Energiequelle (7a, 7b) versorgt werden.

5. Vereisungsschutzverfahren für eine Gondel eines Luftfahrzeugtriebwerks, die einen Lufteinlass (E) umfasst, welcher eine Lippe (2), ein rohrförmiges Lufteinlassstück (3) und ein Vereisungsschutzsystem (5) beinhaltet, wobei das Vereisungsschutzsystem (5) ein Antivereisungsmittel (5a), das durch eine erste elektrische Energiequelle (7a) kontinuierlich versorgt wird und die Lippe (2) ganz oder teilweise abdeckt, und ein Enteisungsmittel (5b), das durch eine zweite elektrische Energiequelle (7b) versorgt wird und das rohrförmige Lufteinlassstück (3) abdeckt, umfasst, wobei das Verfahren die folgenden Schritte umfasst, die durch eine Steuerung (13) des Vereisungsschutzsystems (5) implementiert werden:
- Erfassen eines aktuellen Werts der Gesamtlufttemperatur (TATc) ;
- Ansteuern der zweiten elektrischen Energiequelle (7b) in Abhängigkeit von dem aktuellen Wert der Gesamtlufttemperatur (TATc),
- Aktivieren der ersten elektrischen Energiequelle (7a) vor dem Schritt des Aktivierens der zweiten elektrischen Energiequelle (7b) in Abhängigkeit von dem aktuellen Wert der Gesamtlufttemperatur (TATc).

6. Vereisungsschutzverfahren für eine Gondel eines Luftfahrzeugtriebwerks nach dem vorhergehenden Anspruch, **dadurch gekennzeichnet, dass**, während die Steuerung (13) dazu konfiguriert ist, die zweite elektrische Energiequelle (7b) gemäß einer Pausenzeit (tP), während der das Enteisungsmittel (5b) nicht mit elektrischer Energie versorgt wird, und einer Aktivierungszeit (tA), während der das Enteisungsmittel (5b) mit elektrischer Energie versorgt wird, iterativ anzusteuern, während die Steuerung (13) eine Verarbeitungseinheit (11) und einen Datenspeicher (12) umfasst, in welchem eine Referenztabelle (9) aufgezeichnet ist, die eine oder mehrere Aufzeichnungen umfasst, die angeordnet sind, um jeweils eine Gesamtlufttemperatur (TAT1,...,TATk), eine Aktivierungszeit (tA1,...,tAm) und eine Pausenzeit (tP1,...,tPn) der zweiten elektrischen Energiequelle (7b) zu speichern, der Schritt des Ansteuerns der zweiten elektrischen Energiequelle (7b) in Abhängigkeit von dem aktuellen Wert der Gesamtlufttemperatur (TATc) die folgenden Unterschritte beinhaltet:
- Suchen einer Aufzeichnung der Referenztabelle (9), deren Wert der Gesamtlufttemperatur (TAT) dem aktuellen Wert der Gesamtlufttemperatur (TATc) entspricht;
- Lesen, in der Aufzeichnung der Referenztabelle (9), die mit dem aktuellen Wert der Gesamtlufttemperatur (TATc) assoziiert ist, der jeweiligen Werte der Pausenzeit (tP) und der Aktivierungszeit (tA);
- Ansteuern der zweiten elektrischen Energiequelle (7b) mit:
o einer Pausenzeit mit einer Dauer, die gleich dem gelesenen Wert der Pausenzeit (tP) ist, dann
o einer Aktivierungszeit mit einer Dauer, die gleich dem gelesenen Wert der Aktivierungszeit (tA) ist.

7. Vereisungsschutzverfahren für eine Gondel (1) eines Luftfahrzeugtriebwerks nach dem vorhergehenden Anspruch, **dadurch gekennzeichnet, dass**, während jede Aufzeichnung der Referenztabelle (9) den Wert einer Enteisungsleistung (PG1,...PGp) umfasst, der Schritt des Ansteuerns der zweiten elektrischen Energiequelle (7b) in Abhängigkeit von dem aktuellen Wert der Gesamtlufttemperatur (TATc) ferner die folgenden Unterschritte beinhaltet:
- Lesen, in der Aufzeichnung der Referenztabelle (9), die mit dem aktuellen Wert der Gesamtlufttemperatur (TATc) assoziiert ist, des Werts der Enteisungsleistung (PG1,...PGp) und
- Ansteuern der zweiten elektrischen Energiequelle (7b), um das Enteisungsmittel (5b) in Abhängigkeit von dem gelesenen Wert der Enteisungsleistung (PG1,...PGp) zu versorgen.

## Claims

1. Aircraft engine nacelle (1) comprising an air inlet (E) comprising a lip (2), a tubular air inlet piece (3) and an ice protection system (5), said ice protection system (5) comprising an anti-icing means (5a) wholly or partly covering the lip (2) and a de-icing means (5b) covering the tubular air inlet piece (3) and comprising a controller (13) configured to acquire a current temperature value, **characterized in that**:
- the anti-icing means (5a) is DC powered by a first electrical energy source (7a) and the de-icing means (5b) is powered by second electrical energy source (7b),
- the current temperature value acquired by the controller (13) is the current value of the total air temperature (TATc), and
- the controller (13) is configured to:
∘ control the second electrical energy source (7b) as a function of the current total air temperature value (TATc), and
∘ control the activation of the first electrical energy source (7a), prior to the activation of the second electrical energy source (7b) as a function of the current total air temperature value (TATc).

2. Nacelle (1) according to the preceding claim, **characterized in that** the controller (13) is configured to iteratively control the second electrical energy source (7b) according to a pause time (tP) during which the de-icing means (5b) is not supplied with electrical energy and an activation time (tA) during which the de-icing means (5b) is supplied with electrical energy, the controller (13) comprising a processing unit (11) and a data memory (12) in which there is stored a reference table (9) comprising one or more records arranged to each store a total air temperature (TAT1,...,TATk), an activation time (tA1,...,tAm) and a pause time (tP1,...,tPn) of the second electrical energy source (7b), and **in that** the controller (13) is configured to:
- search for a record of the reference table (9) in which the value of the total air temperature (TAT) corresponds to the current total air temperature value (TATc);
- read, in the record of the reference table (9) associated with the current total air temperature value (TATc), of the respective values of the pause time (tP) and of the activation time (tA);
- control of the second electrical energy source (7b) with:
∘ a pause time of a duration equal to the value of the pause time (tP) read, then
∘ an activation time of a duration equal to the value of the activation time (tA) read.

3. Nacelle (1) according to the preceding claim, **characterized in that** each record of the reference table (9) comprises a de-icing power (PG1,...,PGp), and **in that** the controller (13) is configured to read, in the record of the reference table (9) associated with the current total air temperature value (TATc), the value of the de-icing power (PG1,...,PGp), and to control the second electrical energy source (7b) to power the de-icing means 5b as a function of the value of the de-icing power (PG1,...,PGp) read.

4. Nacelle (1) according to any one of the preceding claims, **characterized in that** the anti-icing means (5a) and the de-icing means (5b) comprise networks of resistive heating elements powered respectively by the first and second electrical energy sources (7a, 7b).

5. Ice protection method for an aircraft engine nacelle comprising an air inlet (E) comprising a lip (2), a tubular air inlet piece (3) and an ice protection system (5), said ice protection system (5) comprising an anti-icing means (5a) DC powered by a first electrical energy source (7a) and wholly or partly covering the lip (2) and a de-icing means (5b), powered by a second electrical energy source (7b), covering the tubular air inlet piece (3), said method comprising the following steps implemented by a controller (13) of the ice protection system (5) :
- acquisition of a current total air temperature value (TATc);
- control of the second electrical energy source (7b) as a function of the current total air temperature value (TATc),
- activation of the first electrical energy source (7a), prior to the step of activation of the second electrical energy source (7b), as a function of the current total air temperature value (TATc).

6. Ice protection method for an aircraft engine nacelle according to the preceding claim, **characterized in that**, the controller (13) being configured to iteratively control the second electrical energy source (7b) according to a pause time (tP) during which the de-icing means (5b) is not supplied with electrical energy and an activation time (tA) during which the de-icing means (5b) is supplied with electrical energy, the controller (13) comprising a processing unit (11) and a data memory (12) in which there is stored a reference table (9) comprising one or more records arranged to each store a total air temperature (TAT1,...,TATk), an activation time (tA1,...,tAm) and a pause time (tP1,...,tPn) of the second electrical energy source (7b),
the step of control of the second electrical energy source (7b) as a function of the current total air temperature value (TATc) comprises the following substeps:
- search for a record of the reference table (9) in which the value of the total air temperature (TAT) corresponds to the current total air temperature value (TATc);
- reading, in the record of the reference table (9) associated with a current total air temperature value (TATc), of the respective values of the pause time (tP) and of the activation time (tA);
- control of the second electrical energy source (7b) with:
∘ a pause time of a duration equal to the value of the pause time (tP) read, then
∘ an activation time of a duration equal to the value of the activation time (tA) read.

7. Ice protection method for an aircraft engine nacelle (1) according to the preceding claim, **characterized in that**, each record of the reference table (9) comprising the value of a de-icing power (PG1,...,PGp), the step of control of the second electrical energy source (7b) as a function of the current total air temperature value (TATc) further comprises the following substeps:
- reading, in the record of the reference table (9) associated with the current total air temperature value (TATc), of the value of the de-icing power (PG1,...,PGp), and
- control of the second electrical energy source (7b) to power the de-icing means (5b) as a function of the value of the de-icing power (PG1,...,PGp) read.
